# EUROPEAN PATENT SPECIFICATION

(11) **EP 2 089 856 B1**
(45) Date of publication and mention of the grant of the patent: **16.03.2011**
(21) Application number: 07827120.2
(22) Date of filing: 01.11.2007
(51) Int. Cl.: G07B 13/00, G07C 5/08

(54) **TAXI METER**
TAXAMETER
TAXIMÈTRE

(30) Priority: 07.11.2006 GB 0622208
(43) Date of publication of application: 19.08.2009
(73) Proprietor: Trzcinski, Jan, Celbridge, Co Kildare (IE)
(72) Inventor: Trzcinski, Jan, Celbridge, Co Kildare (IE)
(74) Representative: Hocking, Adrian Niall
(86) International application number: PCT/IE2007/000107
(87) International publication number: WO 2008/056343

(56) References cited:
- DE-A1- 3 839 221
- US-A1- 2004 083 041
- US-B1- 6 636 790
- ANONYMOUS: "NEW Hunter CAN BUS Interface part no: CB-1" SALES MARKETING,, 14 June 2006 (2006-06-14), page 1, XP003025732

## Description

This invention relates to taxi meter apparatus having a signal processor. More particularly, the taxi meter apparatus comprises a connection to a vehicle's diagnostic system.

Taxi meters are employed to determine the fare due for a journey. Typically, a fare will comprise fixed elements, a time element and a distance element. The fixed elements can comprise payment for such things as the number of passengers and the number of items of luggage undertaking the journey. Usually, these fixed elements are entered by the taxi driver directly. Typically, the time element comprises payment for time when the taxi is waiting, for example when in traffic. The distance element is dependent upon the distance travelled.

Modern taxi meters are electronic and obtain a measure of the distance travelled by connecting electrically to the vehicle's odometer system. The installation of such a taxi meter is a complex, skilled and time consuming process, often taking a skilled installer a number of hours to complete.

Electrical connections must be made directly to the vehicle's electronic circuit boards or wiring with the attendant possibility of damaging the vehicle's circuitry. Such an installation may also invalidate a manufacturer's warranty for the vehicle. This is clearly undesirable from the perspective of the vehicle's owner.

US20040083041 discloses an onboard diagnostic memory module which is connectable to a vehicle's diagnostic system. A computer connected to the memory module can retrieve a trip-based and organised data set for interpretation. However, this disclosure does not suggest or allude to real-time manipulation of the data in order to provide a monetary output.

According to a first aspect of the present invention there is provided taxi meter apparatus comprising a taxi meter having input buttons and a display, connection means which is connectable to a vehicle's diagnostic system to receive an electrical signal from the diagnostic system, the connection means having a connecting lead and an end piece, the end piece having terminals for connection with terminals of an output port of the diagnostic system, and a processor for processing a digital signal corresponding to distance travelled received from the diagnostic system via the connection means and outputting a monetary value or distance value data, so that a total tariff is determinable and displayable on the display of the taxi meter.

The connection of a complimentary connection of the vehicle's diagnostic system to an input connection of the taxi meter simplifies the connection of the taxi meter to the vehicle. This reduces the time required to install the taxi meter compared to the prior art and also reduces the likelihood of damaging the vehicle's electrical circuitry. In addition, the use of a pre-existing connection of the vehicle's diagnostic system that is installed by the vehicle manufacturer reduces the likelihood of the installation prejudicing the vehicle owner's warranty.

The signal processor may be arranged to connect to the vehicle's diagnostic system via a connector that is complimentary to that of the vehicle's diagnostic system.

The connection means may be a controller area network (CAN) connector. The connection means may comprise a shaped end-piece shaped complimentarily to the connector of the vehicle's diagnostic system. The end piece and the connector may be arranged to frictionally engage. The connection means may comprise a plug or a socket arranged to engage with a socket or a plug of the vehicle's diagnostic system.

The incoming electrical signal may comprise odometer data.

The connection means may be arranged to carry a voltage from the vehicle's diagnostic system, for example to power illuminated signage.

The processor is arranged to convert said distance data to distance value data indicative of a monetary value associated with said distance data and being further arranged to add further value data to said distance value data if appropriate to yield a total value data.

The processor may be arranged to output an analogue signal.

According to a second aspect of the present invention there is provided a taxi vehicle comprising a diagnostic system with a CAN data bus, and taxi meter apparatus in accordance with the first aspect of the invention.

The invention will now be described, by way of example only, with reference to the accompanying drawings, in which:
Figure 1 is a schematic diagram of a motor vehicle comprising a taxi meter according to an aspect of the present invention;
Figure 2 is a block diagram showing components of a taxi meter according to an aspect of the present invention;
Figure 3 is a schematic diagram showing a connector of a taxi meter according to an aspect of the present invention connected to a connector of a diagnostic system of the vehicle of Figure 1.

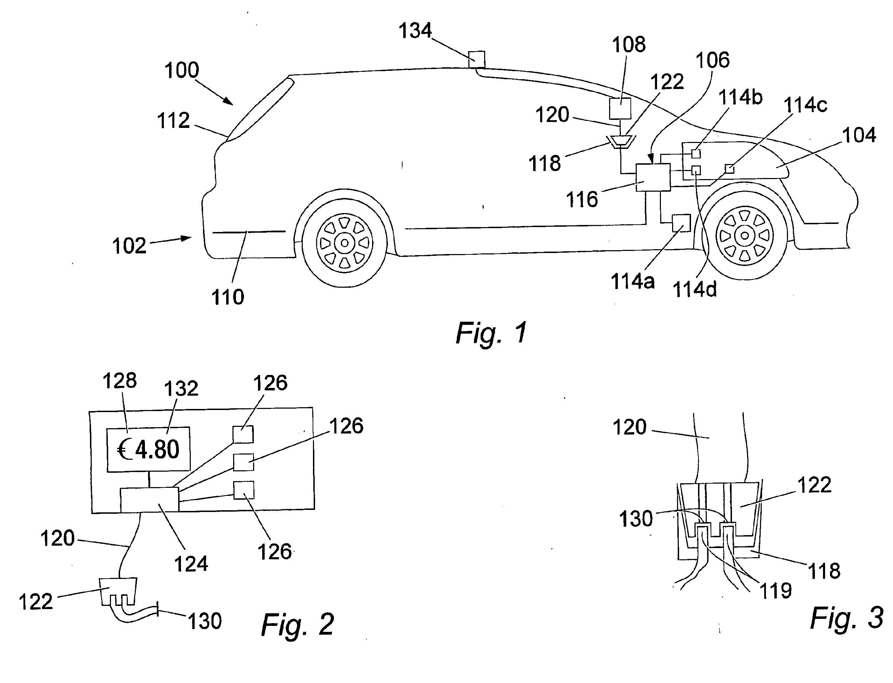

Referring now to Figures 1 to 3, motor vehicle 100 comprises a car body 102, an engine 104, a diagnostic system 106 and a taxi meter 108.

The body 102 comprises a chassis 110 that supports the engine 104 and body panels 112. The engine 104 connects to the diagnostic system 106 such that parameters of engine performance and odometer values are logged by the diagnostic system 106. The logging of these parameters and odometer values is achieved in a manner known to one skilled in the art. Typically, the diagnostic system comprises a CAN data bus operates in a manner which is known to one skilled in the art. Usually, the CAN data bus operates a data transmission rate of 1 Mbits⁻¹.

The diagnostic system 106 comprises a plurality of sensors 114a-d, a processor 116 and an output port 118. The sensors 114a-d are distributed about the engine 104, and other salient points within the vehicle 100 such that parameter values such as engine temperature, speed, distance travelled are captured by the diagnostic system 106.

The parameter values are processed at the processor 116 and are fed to the output port 118, typically in real time. Typically, the output port 118 comprises a plurality of discrete signal carrying terminals 119. Each terminal 119 receives a signal corresponding to either an output from a sensor 114a-d, or a combination of outputs from the sensors 114a-d, or a voltage signal. Typically, the output port 118 is located in vehicle cabin, usually at a height where it is accessible easily by an unskilled installer.

The taxi meter 108 comprises a connecting lead 120 having an end piece 122, a processor 124, input buttons 126 and a display 128. The end piece 122 is shaped complimentarily to the output port 118 of the diagnostic system 106 and is complimentarily male or female to the output port 118. The end piece 122 has terminals 130 that are arranged to connect electrically with the terminals 119 of the output port 118 of the diagnostic system 106. The lead 120 carries signals between the processor 124 and the end piece 122.

In use, the input burtons 126 are used to toggle the taxi meter 108 between on and off states. In the on state the processor 124 processes a digital signal received from the diagnostic system 106 via the output port/endpiece arrangement that corresponds to the distance travelled by the vehicle 100. The processor 124 converts the distance measured since the taxi meter 108 was switched on into a monetary value, typically this is achieved by incrementally increasing a counter when a predetermined distance has been travelled. For example, a rate of €0.90 per km may be the tariff and every time data corresponding to 1 km travelled is received from the diagnostic system 106 at the processor 124 the processor 124 increments a total tariff parameter by €0.90.

The display 128 displays the value of the total tariff parameter 132. Furthermore, some of the input buttons 126 may be used to include fixed fare elements to the total tariff parameter 132. For example, a fixed fare elements of €1.00 may be applied to each passenger above one within the vehicle 100. Accordingly, when the correct input button 126 is depressed the processor 124 is actuated and increases the total tariff parameter 132 by €1.00.

In some embodiments one of the terminals 119 carries a steady output voltage, typically from the vehicle's battery, which can power signage 134 either internally, or externally, of the vehicle, for example a "For Hire" sign.

In a further, not illustrated, embodiment a connector for connecting to a vehicle diagnostic system comprises an end piece that is shaped complimentarily to an output port of the diagnostic system and a cable. The end piece comprises a processor.

The processor processes a digital signal received from the diagnostic system via the output port/end piece arrangement that corresponds to the distance travelled by a vehicle. The processor interprets the digital signal and outputs it to a taximeter via the cable.

Typically, the processor is powered by drawing power from the vehicle diagnostic system.

The taxi meter may be an analogue taximeter in which case the processor outputs an analogue signal to the taximeter. The taximeter converts this analogue signal into a monetary value in a manner that is known to a man skilled in the art.

However, the taximeter may be a digital taximeter and the processor may output either a digital signal corresponding to the distance travelled that is suitably coded to interface with the taximeter. Alternatively, or additionally, the processor 406 may convert the digital signal received from the vehicle diagnostic system into a monetary value that is passed to the taximeter.

It will be appreciated that although described with reference to an arrangement having a connector the present invention is equally applicable to systems that are connected to a vehicle diagnostic system via wires rather than a connector arrangement.

## Claims

1. Taxi meter apparatus comprising a taxi meter (108) having input buttons (124) and a display (128), connection means (120, 122) which is connectable to a vehicle's diagnostic system (106) to receive an electrical signal from the diagnostic system (106), the connection means having a connecting lead (120) and an end piece (122), the end piece (122) having terminals (130) for connection with terminals (119) of an output port (118) of the diagnostic system (106), and a processor (124) for processing a digital signal corresponding to distance travelled received from the diagnostic system (106) via the connection means (120, 122) and outputting a monetary value or distance value data, so that a total tariff is determinable and displayable on the display (128) of the taxi meter (108).

2. Taxi meter apparatus as claimed in claim 1, wherein a voltage is carriable by the connection means (120, 122) when connected to the diagnostic system for powering electrical signage (134).

3. Taxi meter apparatus as claimed in claim 1 or claim 2, further comprising power signage (134) which is powerable by the vehicle's diagnostic system (106) via the connection means (120, 122).

4. A taxi vehicle comprising a diagnostic system (106) with a CAN data bus, and taxi meter apparatus as claimed in any one of the preceding claims.

## Patentansprüche

1. Taxameterapparat, umfassend einen Taxameter (108) mit Eingabetasten (124) und einer Anzeige (128), einem Verbindungsmittel (120, 122), das mit einem Diagnostiksystem (106) eines Fahrzeuges verbindbar ist, um ein elektrisches Signal von dem Diagnostiksystem (106) zu empfangen, wobei das Verbindungsmittel eine Verbindungsleitung (120) und ein Endstück (122) aufweist wobei das Endstück (122) Anschlüsse (130) zur Verbindung mit Anschlüssen (119) eines Ausgangsanschlusses (118) des Diagnostiksystems (106) auwfweist, und einen Prozessor (124) zum Verarbeiten eines digitalen Signals, das einer zurückgelegten Entfernung entspricht, das von dem Diagnostiksystem (106) über das Verbindungsmittel (120, 122) empfangen wurde, und zum Ausgeben eines Geldwertes oder von Entfernungswertdaten, so dass ein Gesamttarif bestimmbar und auf der Anzeige (128) des Taxameters (108) anzeigbar ist

2. Taxameterapparat, wie in Anspruch 1 beansprucht, wobei eine Spannung von dem Verbindungsmittel (120,122) führbar ist, wenn es mit dem Diagnostiksystem zum Speisen einer elektrischen Beschilderung (134) verbunden ist.

3. Taxameterapparat wie in Anspruch 1 oder Anspruch 2 beansprucht, der ferner ein Stromschild (134) umfasst, das von dem Diagnostiksystem (106) des Fahrzeuges über das Verbsndungsmittel (120, 122) mit Strom versorgbar ist.

4. Ein Taxifahrzeug, umfassend ein Diagnostiksystem (106) mit einem CAN-Datenbus und einen Taxameterapparat, wie in einem der vorstehenden Ansprüche beansprucht.

## Revendications

1. Appareil taximètre comprenant un taximètre (108) ayant des boutons d'entrée (124) et un dispositif d'affichage (128), un moyen de connexion (120, 122) qui est apte à être connecté à un système de diagnostic (106) d'un véhicule pour recevoir un signal électrique provenant du système de diagnostic (106), le moyen de connexion ayant un fil connecteur (120) et un embout (122), l'embout (122) (119) d'un port de sortie (118) du système de diagnostic (106), et un processeur (124) pour traiter un signal numérique correspondant à la distance parcourue reçu en provenance du système de diagnostic (106) par l'intermédiaire du moyen de connexion (120, 122) et délivrer en sortie des données de valeur pécuniaire ou de valeur de distance, de telle sorte qu'un tarif total peut être déterminé et affiché sur le dispositif d'affichage (128) du taximètre (108).

2. Appareil taximètre selon la revendication 1, dans lequel une tension est apte à être transportée par le moyen de connexion (120, 122) lorsqu'il est connecté au système de diagnostic pour alimenter une signalisation électrique (134).

3. Appareil taximètre selon l'une des revendications 1 ou 2, comprenant en outre une signalisation électrique (134) qui est apte à être alimentée par le système de diagnostic (106) du véhicule par l'intermédiaire du moyen de connexion (120, 122).

4. Taxi comprenant un système de diagnostic (106) avec un bus CAN, et un appareil taximètre tel que défini à l'une quelconque des revendications précédentes.
